# EUROPÄISCHE PATENTSCHRIFT

(11) **EP 2 967 760 B1**
(45) Veröffentlichungstag und Bekanntmachung des Hinweises auf die Patenterteilung: **10.10.2018**
(21) Anmeldenummer: 14711195.9
(22) Anmeldetag: 12.03.2014
(51) Int. Cl.: A61C 8/00

(54) **IMPLANTAT-ANALOG**
IMPLANT ANALOG
ANALOGUE D'IMPLANT

(30) Priorität: 12.03.2013 DE 102013102466; 29.04.2013 DE 102013104352
(43) Veröffentlichungstag der Anmeldung: 20.01.2016
(73) Patentinhaber: nt-trading GmbH & Co. KG, 76187 Karlsruhe (DE)
(72) Erfinder: JAHN, Dirk, 76835 Weyher (DE)
(74) Vertreter: Witte, Weller & Partner Patentanwälte mbB
(86) Internationale Anmeldenummer: PCT/EP2014/054857
(87) Internationale Veröffentlichungsnummer: WO 2014/140110

(56) Entgegenhaltungen:
- EP-A1- 1 704 830
- WO-A1-2009/137545

## Beschreibung

Die vorliegende Erfindung betrifft ein Zahnimplantat-Analog.

Zahnimplantat-Analoge sind allgemein bekannt. Sie dienen bspw. dazu, jeweils ein sogenanntes Abutment (auch Aufbau genannt) in einem Dentalmodell aufzunehmen. Das Zahnimplantat-Analog soll dabei das im Kieferknochen eines Patienten eingebrachte Zahnimplantat im Dentalmodell simulieren.

Ein derartiges Implantatanalog ist beispielsweise aus der EP1704830A1 bekannt.

Obgleich sich bestehende Zahnimplantat-Analoge in der Praxis bewährt haben, bleibt weiterhin der Wunsch, Verbesserungen zu erreichen, insbesondere im Hinblick auf die Handhabbarkeit und die Ausrichtungsgenauigkeit.

Der vorliegenden Erfindung liegt somit unter anderem die Aufgabe zugrunde, ein Zahnimplantat-Analog zu schaffen, das bspw. besser handhabbar ist und eine größere Ausrichtungsgenauigkeit aufweist, ohne die Fertigung zu erschweren.

Diese Aufgabe wird von einem Zahnimplantat-Analog mit den Merkmalen des Anspruchs 1 gelöst.

Das erfindungsgemäße Zahnimplantat-Analog umfasst
einen länglichen zylindrischen Körper, dessen distales Ende eine Verbindungsschnittstelle zu einem Abutment und dessen proximales Ende ein Außengewinde aufweist,
ein Indexierelement, das an der Außenseite des Körpers angebracht ist, und
ein Tiefenanschlagselement, das an der Außenseite des Körpers vorgesehen ist.

Weitere Ausgestaltungen sind in den Unteransprüchen angegeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

Die Erfindung wird nun anhand eines Ausführungsbeispiels mit Bezug auf die Zeichnungen näher erläutert. Dabei zeigen
Fig. 1 mehrere Ansichten eines erfindungsgemäßen Zahnimplantat-Analogs;
Fig. 2 eine Schnittansicht eines eingesetzten Zahnimplantat-Analogs,
Fig. 3 eine schematische Ansicht einer Aufnahme für ein Zahnimplantat-Analog,
Fig. 4 eine schematische Ansicht eines Zahnimplantat-Analogs mit Befestigungselement, und
Fig. 5. mehrere schematische Ansichten eine Zahnimplantat-Analogs mit einer aufgesetzten Hülse.

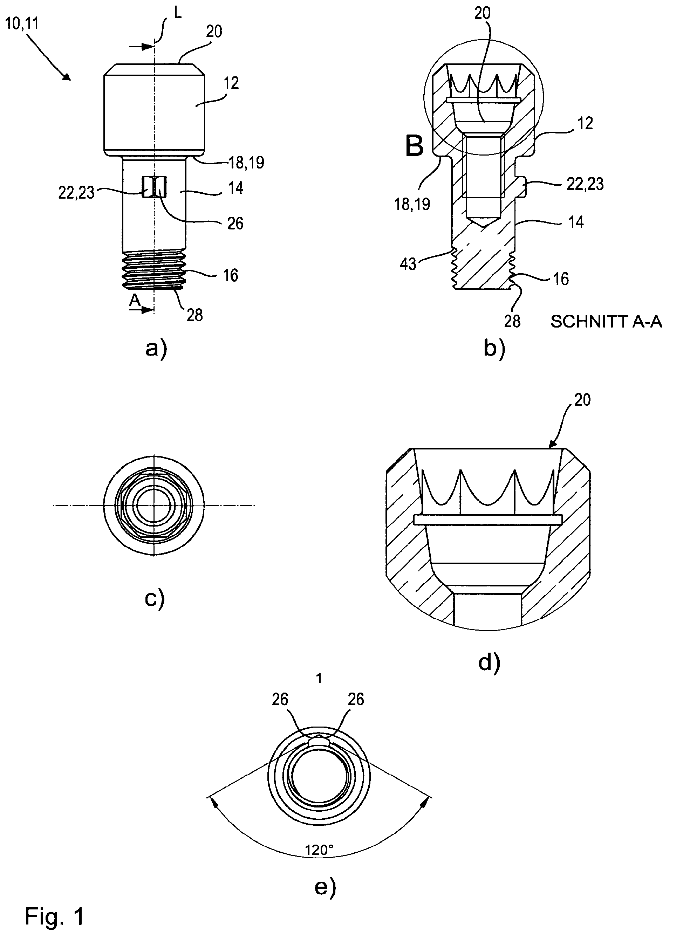

Fig. 1 zeigt mehrere Ansichten eines Zahimplantat-Analogs, das mit dem Bezugszeichen 10 gekennzeichnet ist. Ein solches Zahnimplantat-Analog (nachfolgend kurz Analog genannt) ist vorgesehen, bspw. in ein Dentalmodell eingesetzt zu werden. In diesem Modell soll das Analog ein Zahnimplantat eines Patienten simulieren, so dass ein Abutment in das Analog eingebracht und im Modell optisch abgetastet und/oder bearbeitet werden kann.

Das Analog 10 ist als länglicher zylindrischer Körper 11 bspw. aus Metall ausgebildet. Der Körper 11 gliedert sich in mehrere aufeinanderfolgende Längsabschnitte 12, 14 und 16, wobei der distale Längsabschnitt 12 an einem Ende des Körpers 11 liegt.

Am distalen Längsabschnitt 12 ist eine Verbindungsschnittstelle 20 vorgesehen, die in Fig. 1b) deutlich zu erkennen ist. Diese Verbindungsschnittstelle ist abhängig von einem gewählten Zahnimplantat/Abutment-System ausgelegt. Das heiß mit anderen Worten, dass die Verbindungsschnittstelle an die Rotationssicherungselemente und die Zahnimplantatschraube angepasst ist. Da diese Verbindungsschnittstelle beliebig ausfallen kann, wird darauf an dieser Stelle nicht weiter eingegangen.

Der sich an den distalen Längsabschnitt anschließende zweite Längsabschnitt 14 besitzt einen kleineren Durchmesser als der distale Längsabschnitt, so dass sich eine ringförmige Stufenfläche 18 bildet. Diese Stufenfläche 18 erstreckt sich vorzugsweise senkrecht zur Längsachse L des Analogs 11. Die Stufenfläche 18 dient als Tiefenanschlagselement 19.

Am zweiten Längsabschnitt 14, der einen vorzugsweise gleichen Durchmesser entlang seiner Längserstreckung aufweist, ist ein Indexierelement 22 vorgesehen. Bei diesem Indexierelement 22 handelt es sich vorzugsweise um mehrere in Umfangsrichtung vorzugsweise unsymmetrisch verteilt angeordnete Nocken 23, die gegenüber der Außenfläche des Längsabschnitts 14 hervorstehen. Vorzugsweise sind drei ungleichmäßig angeordnete Nocken 23 vorgesehen. Diese Nocken 23 sollen einerseits eine Verdrehsicherung und andererseits eine exakte und eindeutige Positionierung (Drehposition) in einem Dentalmodell gewährleisten.

Aus Fig. 1e) ergibt sich, dass ein Nocken 23 -in Draufsicht gesehenzwei in einem Winkel von 120° zueinander nach außen verlaufende Flächen 26 besitzt. Der Nocken 23 mit den beiden Flächen 26 ist ausgebildet, mit entsprechend ausgestalteten Nuten im Dentalmodell zusammenzuwirken.

An den mittleren Längsabschnitt schließt sich der dritte proximale Längsabschnitt 16 an, der ein Außengewinde 28 aufweist. Über dieses Außengewinde 28 lässt sich das Analog im Dentalmodell über eine Befestigungsmutter festlegen. Dem Außengewinde 28 ist ein Anschlag zugeordnet, der den Einschraubweg der Befestigungsmutter begrenzt. Der Anschlag gewährleistet folglich eine definierte Position der Befestigungsmutter auf dem Gewinde, da die Befestigungsmutter nur bis zu diesem Anschlag eingedreht werden kann.

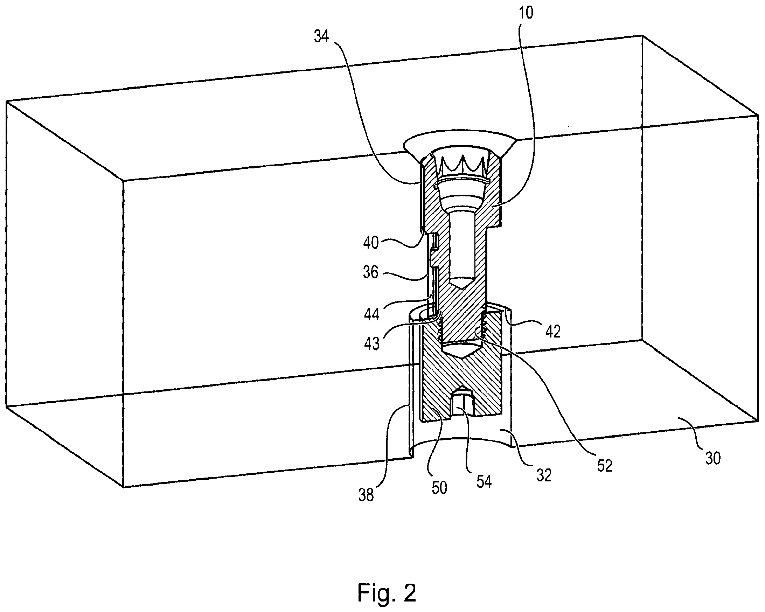

In Fig. 2 ist nun schematisch ein solches Dentalmodell ausschnittsweise gezeigt und mit dem Bezugszeichen 30 gekennzeichnet. Im Dentalmodell 30 ist für ein Analog 10 eine Bohrung 32 vorgesehen, die sich in drei Längsbereiche 34, 36 und 38 gliedert. Der -von oben gesehen- erste Längsbereich 34 hat einen Durchmesser, der an den Außendurchmesser des distalen Längsabschnitts 12 des Analogs angepasst ist, während der zweite Längsbereich 36 an den mittleren Längsabschnitt 14 angepasst ist. Das bedeutet, dass der erste Längsbereich 34 einen größeren Durchmesser aufweist als der zweite Längsbereich 36, so dass sich eine Anschlagfläche 40 ausbildet. Der Durchmesser des zweiten Längsbereichs 36 ist kleiner als der Durchmesser des dritten Längsbereichs 38, so dass sich auch hier eine Anschlagfläche 42 ausbildet.

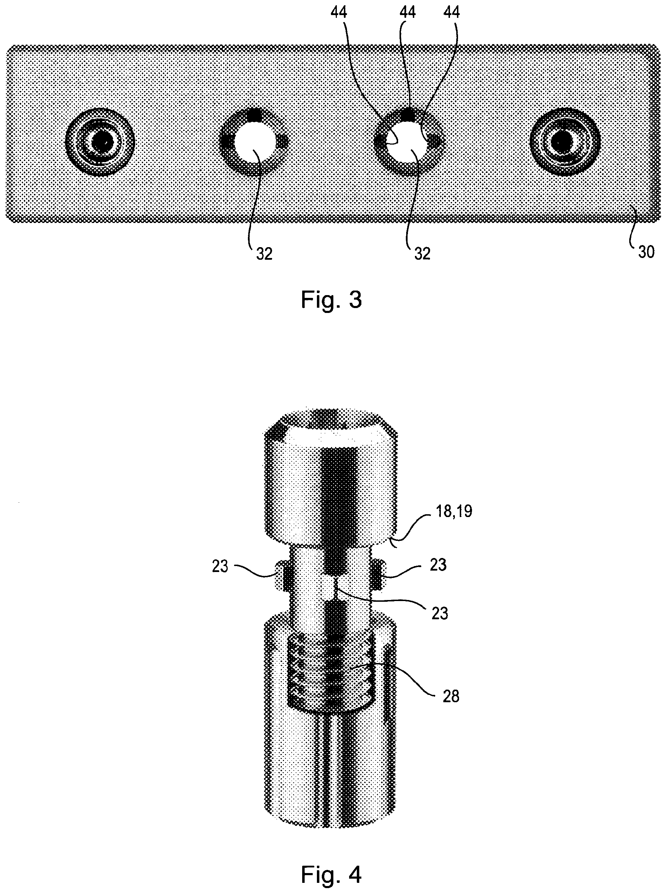

Ferner ist im zweiten Längsbereich 36 für jede Nocke 23 eine entsprechend angepasste Nut 44 ausgebildet, so dass eine eindeutige Positionierung des Analogs in der Bohrung 32 gewährleistet werden kann. Die Anordnung und die Anzahl der Nocken 23 wird so gewählt, dass das Analog nur in einer Drehposition in die Bohrung 32 eingeführt werden kann. In Fig. 3 sind die drei vorgesehen Nuten 44 deutlich zu erkennen.

Über die vorgesehene Anschlagfläche 40, die mit der Stufenfläche 18 des Analogs 10 zusammenwirkt, lässt sich eine exakte Positionierung in Längsrichtung L gewährleisten. Die Anschlagfläche 40 gibt mithin vor, wie weit das Analog 10 in die Bohrung 32 eingebracht werden kann.

Das Analog 10 lässt sich in der Bohrung 32 über ein Befestigungselement 50 festlegen. Das Befestigungselement 50 weist hierfür eine Bohrung mit einem Innengwinde 52 auf, das an das Außengewinde 28 des Analogs 10 angepasst ist. Ferner weist das Befestigungselement 50 eine Schnittstelle 54 für ein Werkzeug auf. Vorzugsweise ist diese Schnittstelle zur Aufnahme eines Sechskantschlüssels ausgelegt.

Wie sich aus Fig. 2 weiter ergibt, ist der Durchmesser des Befestigungselements 50 größer als der Durchmesser des zweiten Längsbereichs 36 der Bohrung, so dass sich das Befestigungselement 50 an der Anschlagfläche 42 abstützt, wenn das Analog 10 festgelegt ist. Ferner liegt das Befestigungselement an dem bspw. am Außengewinde vorgesehenen Anschlag 43 an. Dadurch, dass das Material der Anschlagfläche 42 beim Eindrehen des Befestigungselement etwas nachgeben kann, erfolgt auch ein Anschlag an dem dem Außengewinde zugeordneten Anschlag 43.

Zum Einsetzen des Analogs 10 in das Dentalmodel 30 wird es von oben in die Bohrung 32 eingesteckt, wobei die Drehposition so gewählt sein muss, dass die Nocken 23 in die entsprechenden Nuten 44 eingreifen. Nach dem Eingreifen der Nocken in die Nuten ist zwar eine Bewegung in Längsrichtung aber keine Drehung des Analogs mehr möglich. Sobald das Analog auf der Anschlagfläche 40 aufliegt, ist die Endposition des Analogs erreicht und durch Eindrehen des Befestigungselements 50 wird das Analog fixiert.

Das Analog 10 im Dentalmodell 30 ermöglicht dann, ein Abutment über die Verbindungsschnittstelle 20 mit dem Analog 10 zu verbinden und zwar in einer Position, die exakt der Position in der Mundhöhle eines Patienten entspricht.

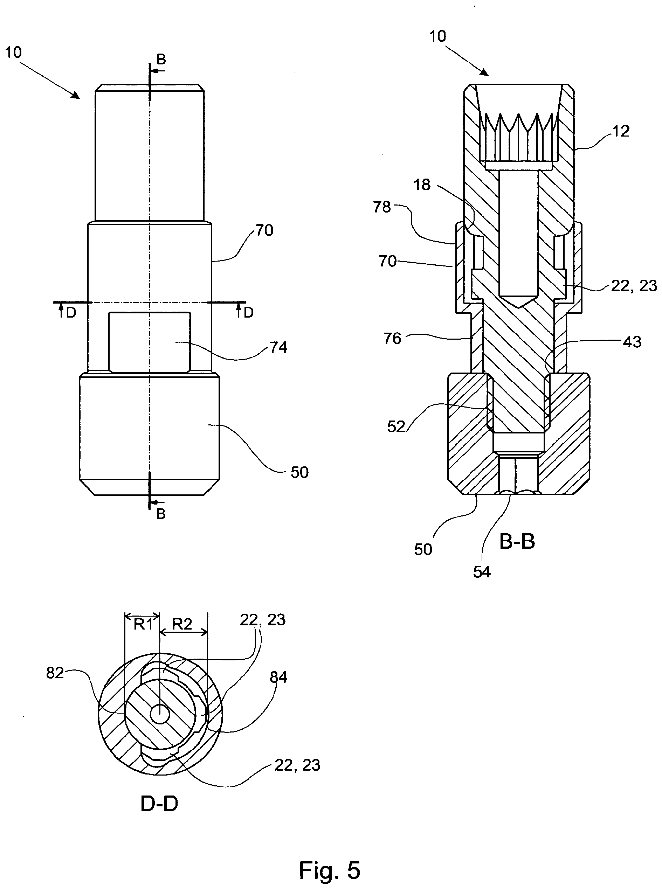

In Fig. 5 ist das bereits beschriebene Analog 10 mit einer Hülse 70 gezeigt. Diese Hülse 70 ist rohrförmig ausgebildet und besitzt an der Außenfläche zwei einander gegenüber liegende Abflachungen 74. Diese Abflachungen 74 sind im unteren Bereich, d.h. dem Befestigungselement 50 zugewandt, vorgesehen und erstrecken sich in Längsrichtung bis unterhalb der Mitte der Hülse 70. Diese Abflachungen können in einem Gipsmodell zur Indexierung und Verdrehsicherung dienen.

Die Länge der Hülse 70 ist in etwa so gewählt, dass sie der Länge des Analogs 10 von der Stufenfläche 18 bis zum Gewinde 28 entspricht. Mit anderen Worten entspricht die Länge der Hülse 70 der Länge des zweiten Abschnitts 14 des Analogs 10.

Das Innere der Hülse ist in zwei Längsabschnitte aufgeteilt, nämlich einen unteren Längsabschnitt 76, der einen im wesentlichen kreisförmigen Querschnitt aufweist, und einen oberen Längsabschnitt 78, der eine an die Nocken 23 angepasste Geometrie aufweist. Im vorliegenden Beispiel setzt sich der Querschnitt im oberen Längsabschnitt 78 aus zwei Bereichen 82, 84 mit unterschiedlichem Radien zusammen. Der Radius R1 des Bereichs 82 ist dabei kleiner als der Radius R2 des anderen Bereichs 84. Der kleinere Radius R1 ist an den Radius der Außenwand des Analogs angepasst, während der größere Radius an den Radius des Analogs im Bereich der Nocken angepasst ist.

Die Innengeometrie der Hülse 70 im oberen Längsabschnitt 78 ist damit so ausgebildet, dass die Hülse von unten vorzugsweise nur in einer vorgegebenen Drehwinkelposition auf das Analog 10 aufgesteckt werden kann.

Diese Hülse 70 wird dann verwendet, wenn das Analog in einem Gipsmodell verwendet wird, bei dem die Gefahr besteht, dass die Nocken 23 von Gips umgeben werden und ein Lösen des Analogs dann nicht mehr möglich wäre. Die Hülse verhindert folglich, dass Gips in den Bereich der Nocken 23 kommt und lässt es weiter zu, dass das Analog 10 in Längsrichtung nach oben aus der Hülse herausgezogen werden kann.

## Patentansprüche

1. Zahnimplantat-Analog, mit
einem länglichen zylindrischen Körper (11) mit einem ersten, distalen (12), einem zweiten, mittleren (14) und einem dritten, proximalen Längsabschnitt (16), wobei der erste Längsabschnitt (12) eine Verbindungsschnittstelle (20) zu einem Abutment, der dritte Längsabschnitt (16) ein Außengewinde (28) und der zweite Längsabschnitt (14) einen gleichen Durchmesser entlang der Längsrichtung aufweist,
einem Indexierelement (22), das an der Außenseite des Körpers am zweiten Längsabschnitt (14) vorgesehen ist,
einem Tiefenanschlagselement (40), das an der Außenseite des Körpers (11) am ersten Längsabschnitt (12) vorgesehen und als ringförmige Stufenfläche ausgebildet ist, die sich in radialer Richtung senkrecht zur Längsachse erstreckt, wobei die Stufenfläche durch eine Durchmesserveränderung des Körpers vom ersten Längsabschnitt (12) zum zweiten Längsabschnitt (14) gebildet wird,
einem Befestigungselement (50), das ausgelegt ist, mit dem Außengewinde (28) des Körpers zusammenzuwirken und
einem Anschlag (43), der dem Außengewinde (28) zugeordnet ist und den Einschraubweg des Befestigungselements (50) begrenzt.

2. Zahnimplantat-Analog nach Anspruch 1, **dadurch gekennzeichnet, dass** das Indexierelement zumindest einen Nocken aufweist.

3. Zahnimplantat-Analog nach Anspruch 1 oder 2, **dadurch gekennzeichnet, dass** das Indexierelement drei Nocken aufweist, die in Umfangsrichtung des Körpers verteilt angeordnet sind.

4. Zahnimplantat-Analog nach einem der vorhergehenden Ansprüche, **dadurch gekennzeichnet, dass** das Indexierelement zu einem Element der Verbindungsschnittstelle ausgerichtet ist.

5. Zahnimplantat-Analog nach Anspruch 1, **dadurch gekennzeichnet, dass** das Befestigungselement eine Befestigungsmutter mit einem Innengewinde an einem Ende ist, welches an das Außengewinde angepasst ist, und mit einem Eindrehelement an einem anderen Ende.

6. Zahnimplantat-Analog nach Anspruch 5, **dadurch gekennzeichnet, dass** das Eindrehelement als Schnittstelle für ein Innensechskant-Werkzeug ausgebildet ist.

7. Zahnimplantat-Analog nach einem der vorhergehenden Ansprüche, **dadurch gekennzeichnet, dass** die Verbindungsschnittstelle ausgelegt ist, mit einer Dentalimplantat-Schraube und Rotationssicherungselementen eines Abutments zusammenzuwirken.

8. Zahnimplantat-Analog nach einem der vorhergehenden Ansprüche, **gekennzeichnet durch** eine Hülse, in die der zylindrische Körper zumindest teilweise einsteckbar ist.

9. Zahnimplantat-Analog nach Anspruch 8, **dadurch gekennzeichnet, dass** die Hülse an ihrer Innenfläche eine Geometrie aufweist, die zusammen mit dem Indexierelement eine Indexierung und Rotationssicherung bereitstellt.

10. Zahnimplantat-Analog nach Anspruch 8 oder 9, **dadurch gekennzeichnet, dass** die Hülse an ihrer Außenfläche zumindest eine Abflachung aufweist.

## Claims

1. A tooth implant analog with
an elongated cylindrical body (11) comprising a first distal (12), a second middle (14) and a third proximal longitudinal section (16), the first longitudinal section (12) having a connection interface (20) for an abutment, the third longitudinal section (16) having an outer thread (28), and the second longitudinal section (14) having a constant diameter along its length,
an indexing element (22), which is attached to the outer face of the body at the second longitudinal section (14),
a depth stop element (40), which is provided on the outer face of the body (11) at the first longitudinal section (12) and configured to define an annular step surface extending in radial direction perpendicular to the longitudinal axis of the body, wherein the step surface is formed by a change of diameter of the body from the first longitudinal section (12) to the second longitudinal section (14),
a fastening element (50) configured to engage with the outer thread (28) of the body, and
a stop (43) assigned to the outer thread (28) and limiting the screwing-in path of the fastening element (50).

2. The tooth implant analog as claimed in claim 1, wherein the indexing element has at least one cam.

3. The tooth implant analog as claimed in claim 1 or 2, wherein the indexing element has three cams, which are distributed in the circumferential direction of the body.

4. The tooth implant analog as claimed in any preceding claim, wherein the indexing element is aligned with respect to an element of the connection interface.

5. The tooth implant analog as claimed in claim 1, wherein the fastening element is a fastening nut with an inner thread at one end, which thread is adapted to the outer thread, and with a screwing-in element at another end.

6. The tooth implant analog as claimed in claim 5, wherein the screwing-in element is designed as an interface for a hexagon socket tool.

7. The tooth implant analog as claimed in any preceding claim, wherein the connection interface is designed to interact with a dental implant screw and rotary protection elements of an abutment.

8. The tooth implant analog as claimed in any of the preceding claims, comprising a sleeve into which the cylindrical body can be fitted at least in part.

9. The tooth implant analog as claimed in claim 8, wherein, on its inner face, the sleeve has a geometry which, together with the indexing element, provides indexing and protection against rotation.

10. The tooth implant analog as claimed in claim 8 or 9, wherein, on its outer face, the sleeve has at least one flattened portion.

## Revendications

1. Analogue d'implant dentaire, comprenant
un corps (11) cylindrique allongé, pourvu d'un premier tronçon longitudinal distal (12), d'un deuxième tronçon longitudinal (14) central et d'un troisième tronçon longitudinal (16) proximal, le premier tronçon longitudinal (12) comportant une interface de liaison (20) sur un pilier, le troisième tronçon longitudinal (16) comportant un filetage (28) et le deuxième tronçon longitudinal (14) présentant un diamètre identique le long de la direction longitudinale,
un élément d'indexation (22) qui est prévu sur la face extérieure du corps, sur le deuxième tronçon longitudinal (14),
un élément de butée profonde (40) qui est prévu sur la face extérieure du corps (11), sur le premier tronçon longitudinal (12) et qui est conçu sous la forme d'une surface annulaire étagée qui s'étend dans la direction radiale, à la perpendiculaire de l'axe longitudinal, la surface étagée étant formée par une variation du diamètre du corps, du premier tronçon longitudinal (12) vers le deuxième tronçon longitudinal (14),
un élément de fixation (50) qui est conçu pour coopérer avec le filetage (28) du corps et
une butée (43) qui est associée au filetage (28) et qui délimite la course de vissage de l'élément de fixation (50).

2. Analogue d'implant dentaire selon la revendication 1, **caractérisé en ce que** l'élément d'indexation comporte au moins une came.

3. Analogue d'implant dentaire selon la revendication 1 ou 2, **caractérisé en ce que** l'élément d'indexation comporte trois cames, qui sont placées en étant distribuées dans la direction périphérique du corps.

4. Analogue d'implant dentaire selon l'une quelconque des revendications précédentes, **caractérisé en ce que** l'élément d'indexation est orienté vers un élément de l'interface de liaison.

5. Analogue d'implant dentaire selon la revendication 1, **caractérisé en ce que** l'élément de fixation est un écrou de fixation pourvu sur une extrémité d'un taraudage, lequel est adapté au filetage et d'un élément de vissage sur l'autre extrémité.

6. Analogue d'implant dentaire selon la revendication 5, **caractérisé en ce que** l'élément de vissage est conçu sous la forme d'une interface pour un outil hexagonal.

7. Analogue d'implant dentaire selon l'une quelconque des revendications précédentes, **caractérisé en ce que** l'interface de liaison est conçue pour coopérer avec une vis d'implant dentaire et avec des éléments de blocage en rotation d'un pilier.

8. Analogue d'implant dentaire selon l'une quelconque des revendications précédentes, **caractérisé par** une douille, dans laquelle le corps cylindrique est insérable au moins en partie.

9. Analogue d'implant dentaire selon la revendication 8, **caractérisé en ce que** sur sa surface interne, la douille présente une géométrie qui en commun avec l'élément d'indexation met à disposition une indexation et un blocage en rotation.

10. Analogue d'implant dentaire selon la revendication 8 ou 9, **caractérisé en ce que** sur sa surface extérieure, la douille comporte au moins un méplat.
